# FASCICULE DE BREVET EUROPEEN

(11) **EP 0 769 606 B1**
(45) Date de publication et mention de la délivrance du brevet: **04.04.2001**
(21) Numéro de dépôt: 96402078.8
(22) Date de dépôt: 30.09.1996
(51) Int. Cl.: E21B 47/01, E21B 17/10

(54) **Dispositif d'exploration d'une formation souterraine traversée par un puits horizontal comportant plusieurs capteurs**
Gerät zum Erkunden einer von einem horizontalen Bohrloch durchquerten, unterirdischen Formation mittels Sensoren
Exploration device for a subterranean formation traversed by a horizontal well comprising a plurality of sensors

(30) Priorité: 17.10.1995 FR 9512265
(43) Date de publication de la demande: 23.04.1997
(73) Titulaire: INSTITUT FRANCAIS DU PETROLE, 92500 Rueil Malmaison (FR)
(72) Inventeur: Meynier, Patrick, 78400 Chatou (FR)

(56) Documents cités:
- FR-A- 2 547 861
- FR-A- 2 636 741
- FR-A- 2 656 034
- FR-A- 2 674 029
- GB-A- 2 249 333
- US-A- 3 282 349
- US-A- 3 991 850

## Description

La présente invention concerne un dispositif d'exploration d'une formation souterraine traversée par un puits, adapté à fonctionner dans des portions de puits où sa progression sous l'effet de la gravité est difficile et notamment dans des portions de puits horizontales ou fortement déviées par rapport à la verticale.

Le dispositif selon l'invention convient notamment pour réaliser des opérations de prospection sismique du sous sol.

Suivant une technique connue, on réalise l'exploration sismique d'une formation géologique en disposant dans un ou plusieurs puits forés au travers de cette formation un ensemble de réception et/ou d'émission pour capter des signaux renvoyés par les discontinuités du sous-sol en réponse à des ondes sismiques ou acoustiques émises dans un puits ou à la surface du sol.

Les équipements sismiques peuvent être utilisées dans des portions verticales ou suffisamment verticales des puits et dans ce cas, ils y sont descendus par l'effet de la gravité.

Les équipements sismiques sont placés par exemple dans un outil de puits ou dans plusieurs outils de puits disposés en chapelet le long d'un câble électro-porteur, comme décrits par exemple dans les brevets FR 2 501 380, 2 616 230, 2 636 741 du demandeur.

Par les brevets FR 2 656 034 et 2 674 029 du demandeur, on connait une méthode de prospection sismique d'une formation géologique comportant l'utilisation d'un dispositif de réception comprenant une ou plusieurs unités de réception qui sont mis en place dans un puits vertical au moyen d'une colonne de production. Les unités sont conduites jusqu'à la profondeur d'installation et sont plaquées contre la paroi du puits ou bien contre un tube de cuvelage. Le couplage peut être fait au moyen de patins ou de bras pouvant s'écarter de la colonne sous l'action de ressorts. Ces unités peuvent encore être placées dans des boitiers que l'on écarte de la colonne et que l'on découple mécaniquement de celle-ci.

Par le brevet FR 2 703 470 du demandeur, on connait un procédé d'installation dans un ou plusieurs puits traversant une zone souterraine, d'un ensemble d'émission-réception d'ondes sismiques ou acoustiques comportant par exemple des transducteurs émetteurs-récepteurs qui peuvent être installés derrière une colonne tubulaire utilisée pour d'autres fonctions et reliées de façon permanente ou non par des câbles à une station de commande et d'enregistrement en surface. Avec un tel ensemble, on réalise par exemple des diagraphies des couches environnant chaque puits en ondes P ou S, et effectuer ainsi une surveillance de longue durée d'un gisement.

Par le brevet FR 2 655 373 du demandeur, on connait aussi un système pour conduire un dispositif d'exploration non rigide comportant plusieurs sondes réunies les unes aux autres par des portions de câble électro-porteur, dans un puits où sa progression par l'effet de la gravité, est gênée, enraison notamment de l'inclinaison du puits par rapport à la verticale. On guide ce dispositif vers une zone de puits déviée au moyen d'une colonne tubulaire formée d'un train de tiges. Un dispositif de connexion électrique différée est utilisé pour connecter l'ensemble de sondes à un câble relié à une station de commande et d'enregistrement en surface. Un courant de fluide est établi dans la colonne pour pousser la première sonde hors de celle-ci et permettre l'ouverture de bras d'ancrage. Par une traction sur la colonne, on fait alors sortir l'ensemble des sondes dans le puits et l'on porocède à des cycles de mesure.

Le dispositif selon l'invention permet de réaliser l'exploration d'une formation souterraine traversée par un puits, et il est adapté à être descendu dans une zone du puits où sa progression sous l'effet de la gravité est difficile, et notamment dans une portion de puits fortement inclinée par rapport à la verticale. Il est caractérisé en ce qu'il comporte :
- une pluralité de modules d'exploration rigides interconnectés bout à bout comprenant chacun un élément tubulaire rigide pourvu, à chacune de ses extrémités, de moyens de connexion avec au moins un autre élément tubulaire, au moins un boitier contenant des éléments sensibles, des moyens d'écartement à ressorts pour plaquer chaque boitier en permanence contre la paroi du puits ainsi que des moyens de découplage pour isoler mécaniquement chaque boitier, des éléments tubulaires;
- un câble de liaison connecté à une station centrale en surface; et
- un bloc de raccordement comprenant un système d'acquisition relié aux différents modules par un faisceau de conducteurs électriques passant à l'intérieur des éléments tubulaires, reliés aux éléments sensibles, pour collecter des signaux issus de ces différents éléments sensibles, et des moyens de connexion électrique différée en milieu humide entre le câble de liaison et le système d'acquisition, ce bloc de raccordement étant interposé entre l'ensemble des modules d'exploration et une colonne rigide reliée à des moyens de manoeuvre en surface pour conduire l'ensemble d'exploration jusque dans ladite portion du puits.

Suivant un mode de réalisation, les moyens d'écartement à ressorts comportent par exemple des lames flexibles, chacune en appui à ses extrémités sur des manchons solidaires de chaque élément tubulaire, sur lesquelles sont fixés les boitiers, et les moyens de découplage comportent des gaînes en un matériau amortisseur, interposées entre chaque lame flexible et l'élément tubulaire correspondant.

Chaque manchon comporte par exemple un élément de support disposé entre deux butées d'extrémité solidaires de l'élément tubulaire, et mécaniquement isolé par une gaîne, de l'élément de support et des butées, et le dispositif comporte des connecteurs électriques à l'intérieur des éléments tubulaires rigides pour la connexion électrique au faisceau des conducteurs électriques associés aux éléments sensibles.

Chaque élément de support peut comporter par exemple deux parties disposées de part et d'autre de l'élément tubulaire, avec interposition de la gaîne, et des moyens de fixation pour réunir ces deux parties et éventuellement des moyens d'indexation pour empêcher toute rotation des éléments de support par rapport à l'élément tubulaire.

De préférence, chaque lame flexible est solidaire à ses extrémités, d'axes pouvant se déplacer dans des lumières de guidage dans des plaques solidaires de chaque élément de support.

Suivant un autre mode de réalisation, les moyens d'écartement à ressorts comportent des lames flexibles sur lesquelles sont fixés les boitiers, chaque lame flexible est engagée dans une fente ménagée dans la paroi de la tige suivant une génératrice et elle est en appui à ses extrémités opposées sur des manchons solidaires d'un tube rigide disposé à l'intérieur de chaque élément tubulaire, les moyens de découplage comportent des gaînes en un matériau amortisseur, interposées autour de chaque manchon pour l'isoler acoustiquement à la fois de la paroi intérieure de l'élément tubulaire et du tube rigide, et chaque lame flexible est solidaire à ses extrémités, d'axes pouvant se déplacer dans des lumières de guidage ménagées dans les manchons.

Suivant un autre mode de réalisation, les moyens de connexion électrique différée, comportent une fiche mâle multi-contacts, un prolongement tubulaire pour le guidage dans le bloc de raccordement, d'une prise femelle multi-contacts reliée au câble multi-conducteurs, et des moyens de verrouillage de la prise femelle en position d'engagement.

Suivant un mode particulier de réalisation le dispositif comporte un élément tubulaire de tête comportant un balourd et un indicateur d'orientation pour déterminer le positionnement angulaire de l'ensemble des modules d'exploration par rapport à la verticale.

Le dispositif selon l'invention est avantageux en ce que :
- il peut être constitué par interconnexion bout à bout d'un nombre variable de modules d'exploration banalisés associés par l'intermédiaire d'un bloc de raccordement, à un train de tiges que l'on allonge suffisamment pour le pousser jusque dans une portion de puits soit très inclinée soit conformée de telle manière qu'elle empêche la libre descente de l'ensemble des modules;
- les liaisons électriques entre les différents instruments ou capteurs sont tous réunis et protégés dans les éléments tubulaires.

D'autres caractéristiques et avantages du dispositif selon l'invention, apparaîtront à la lecture de la description ci-après de modes de réalisation décrits à titre d'exemples non limitatifs, en se référant aux dessins annexés où :
- la Fig. 1 montre schématiquement l'ensemble du dispositif suivant un premier mode de réalisation, mis en place dans un puits dont une partie est horizontale;
- la Fig.2 montre schématiquement en coupe l'agencement de chaque module d'exploration;
- la Fig.3 montre plus en détail l'agencement d'un manchon re raccordement d'une lame flexible;
- la Fig.4 montre schématiquement le mode de connexion à un faisceau de conducteurs courant le long des éléments tubulaires, des conducteurs électriques associés àaux éléments sensibles;
- la Fig.5 montre schématiquement en coupe un bloc de raccordement de l'ensemble des modules d'exploration à un train de tiges remontant jusqu'à la surface; et
- la Fig.6 montre un deuxième mode de réalisation comportant deux lames flexibles associées aux éléments tubulaires par des moyens de fixation intérieurs à ces éléments.

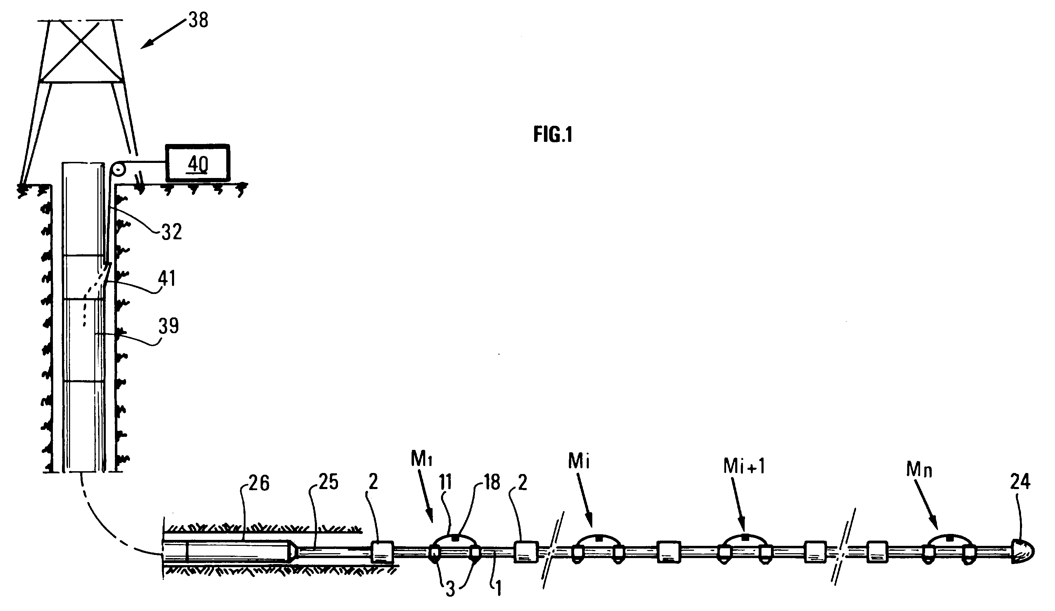

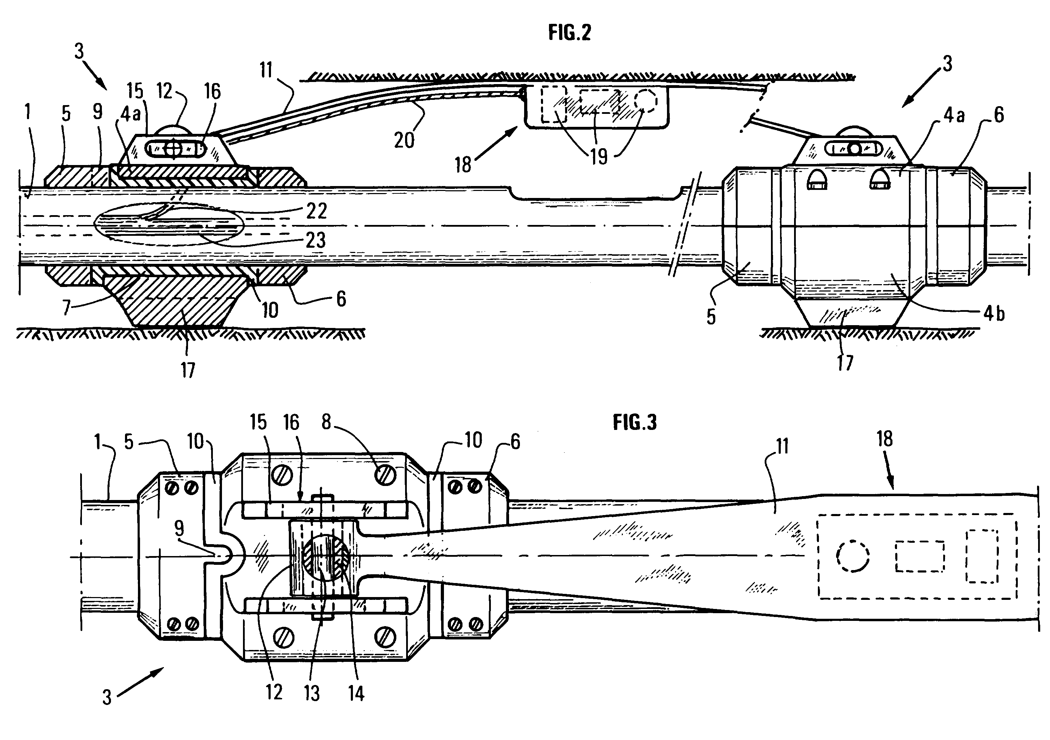

Le dispositif est constitué (Fig.1, 2) d'un ensemble de modules M1, Mi, Mi+1,..., Mn interconnectés bout à bout. Chacun de ces modules Mi comporte un élément tubulaire rigide ou tige 1, terminé à ses deux extrémités opposés par un embout de fixation 2 pour son raccordement (par vissage par exemple) avec ceux des éléments tubulaires adjacents. Sur chaque tige 1, à distance l'un de l'autre, sont disposés deux manchons 3. Chaque manchon 3 comporte un élément de support 4 disposé entre deux butées d'extrémité 5, 6 fixées rigidement à la tige 1. Une gaîne en un matériau élastique 7 est placée autour de l'élément tubulaire entre chaque paire de butées 5, 6. Les éléments de support 4 comportent chacun deux demi-coquilles 4a, 4b plaquées contre la gaine 7 de part et d'autre de l'élément tubulaire et réunies l'une à l'autre par des vis 8. Pour empêcher toute rotation des éléments de support 4 autour des tiges 1, au moins une des butées 5, 6 comporte un ergot d'indexation 9 adapté à venir s'engager dans une cavité correspondante de l'une des demi-coquilles 4a par exemple. Les gaînes de découplage 7 comportent des plaques d'extrémité 10 pour isoler mécaniquement les éléments support 4 de leurs butées respectives 5, 6.

Le dispositif comporte également une lame flexible 11 terminée à ses deux extrémités opposées par une pièce d'embout 12 pourvue d'une cavité pour un axe 13 (Fig.2, 3). Un élément de découplage 14 du type "silent-block" par exemple, est disposé autour de chaque axe 13. Une des demi-coquilles 4a de chaque élément de support 4 comporte deux plaques latérales 15 orientées parallèlement à l'axe des tiges et pourvues d'ouvertures allongées 16 pour le guidage de l'axe 13 de chaque pièce d'embout. Le coulissement de chaque axe 13 offre à chaque lame flexible 11 une certaine latitude de fléchissement. La demi-coquille 4b opposée de chaque élément de support 4 comporte un sabot d'appui 17.

A la partie médiane de chaque lame flexible 11 (Fig.2), est fixé un boitier 18 pour des instruments d'exploration. Il peut s'agir de capteurs sensibles notamment aux ondes acoustiques ou sismiques.tels qu'un géophone triaxial ou "triphone" 19 par exemple. Les conducteurs électriques 20 associés à ces instruments, sortent des boitiers 18 par des traversées étanches (non représentées) et passent le long de la lame flexible 11. Ils pénètrent à l'intérieur de la tige 1 par une ouverture (non représentée) au niveau de l'un des élément de support 4.

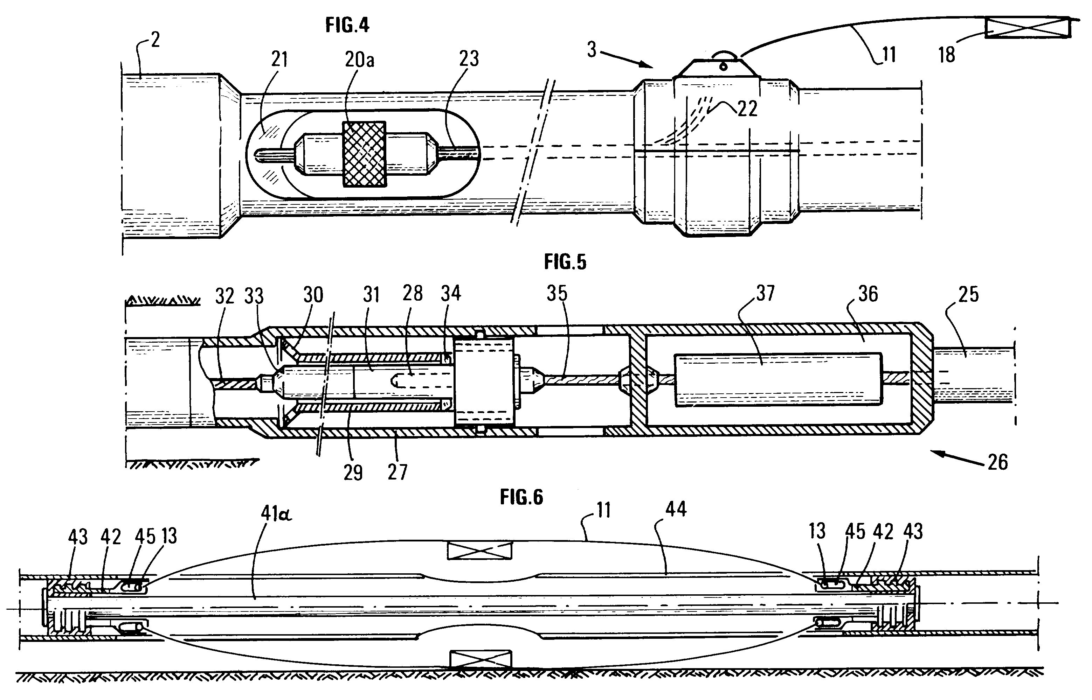

Un connecteur multibroches 20a (Fig.4) est disposé à l'intérieur de chaque tige 1. Il est accessible en ôtant une plaque amovible 21 recouvrant une ouverture au travers dans la paroi. Aux broches de ce connecteur 20a, sont soudés d'une part les conducteurs électriques 22 associés aux instruments dans le boitier 18 du même module Mi, et d'autre part des conducteurs 23 associés à d'autres instruments dans les modules suivants Mi+1... Mn

L'ensemble des modules interconnectés bout à bout, est associé (Fig. 1) à une première extrémité à un élément tubulaire de tête 24 pourvue d'un balourd et d'un indicateur d'orientation (non représenté) destiné à déterminer l'orientation du balourd relativement au plan vertical. On peut utiliser par exemple un indicateur d'un type connu comportant une masselotte pendulaire au contact d'une piste de potentiomètre.

A son extrémité opposée, l'élément tubulaire M1 est relié par une tige 25 à un bloc de raccordement 26 pourvu de moyens de connexion électrique différée en milieu humide. Le bloc 26 comporte (Fig.5) un corps tubulaire 27, une fiche mâle multi-contacts 28 orientée suivant l'axe du corps 27, au centre d'un prolongement tubulaire de guidage 29 de section inférieure à celle du corps. qui est terminé par une collerette 30. Ce prolongement 29 sert au guidage d'une prise femelle multi-contacts 31, connectée aux différents conducteurs d'un câble multi-conducteurs 32, qui est adaptée à venir s'emboiter sur la fiche mâle 28. La prise 31 est surmontée d'une barre de lestage tubulaire 33. Des verrous 34 pouvant être télécommandés depuis la surface, permettent de bloquer la prise en position d'enfichage sur la fiche 28.

Un câble 35 relie la fiche multi-contacts 28 à un compartiment étanche 36 du corps tubulaire 27 contenant un système d'acquisition et de transmission 37 tel que décrit par exemple dans le brevet FR 2 688 896 du demandeur. Le bloc de raccordement 26 est relié à des moyens de manoeuvre 38 en surface par l'intermédiaire d'un train de tiges 39.

Le système 37 reçoit les signaux transmis jusqu'à lui par le faisceau 38 formé par adjonction successives au niveau des connecteurs 21, des conducteurs issus respectivement des différents boitiers 18 associés à l'ensemble de modules M1 à Mn et à l'indicateur d'orientation dans l'élément tubulaire de tête 24. Il les numérise et les code pour leur transmission à une station centrale 40 de commande et d'enregistrement placée en surface.

Pour simplifier le montage de l'ensemble des modules d'exploration M1-Mn, on peut les banaliser en disposant de préférence dans chacun d'eux des connecteurs multibroches 21 identiques avec un nombre de broches suffisant pour l'interconnexion de tous les fils conducteurs qui aboutissent finalement à l'ensemble d'acquisition et de codage 37.

Suivant un agencement connu notamment par le brevet FR-A-2 547 861 du demandeur, la connexion entre le câble multi-conducteurs 32 et la station centrale 40 est facilitée par l'emploi d'un raccord spécial à fenêtre 41 ("side entry sub"), permettant, une fois qu'il est en place, de modifier la longueur du train de tiges 39 sans avoir à interrompre les liaisons conductrices.

On peut constituer par exemple un ensemble d'exploration comportant 12 éléments tubulaires 1 d'une dizaine de mètres de long, en acier en aluminium ou en fibre de verre, associés chacun à un "triphone", et renfermant par exemple un connecteur électrique 20 à 61 broches permettant également la connexion électrique de l'indicateur d'orientation dans la section de tête 24.

### Fonctionnement :

La mise en place de l'ensemble des modules d'exploration M1 à Mn jusque dans une zone d'intervention dans un puits s'effectue de la façon suivante.

On engage dans le puits l'élément tubulaire de tête 24 et, par interconnexions successives bout à bout, les différents modules M1 à Mn, la tige intercalaire 25, le bloc de raccordement 26 et éventuellement un certain nombre de sections du train de tiges 39. On fixe ensuite le raccord spécial à fenêtre 40 dans lequel est introduit la prise multi-contacts 31 surmontée de sa barre de charge 33. Une tête d'injection (non représentée) est ensuite associée au train de tiges 39 pour pomper la prise multi-contacts 31 jusqu'à ce qu'elle vienne s'enficher sur la fiche 28 du bloc de raccordement 26.

On rajoute alors suffisamment de sections au train de tiges 39 de façon à amener l'ensemble de modules M1-Mn jusqu'à la zone du puits où l'on va procéder à des opérations d'exploration. En surveillant depuis la station de surface 40 les indications du détecteur d'orientation dans l'élément de tête à balourd 24 et en faisant tourner suffisamment sur lui-même le train de tiges 39 au cours de sa progression, on peut orienter les différents modules M1 à Mn de façon que les lames flexibles 11 et donc les boitiers d'instruments 18, soient tous dans le même plan, vertical par exemple.

On peut par exemple disposer une source sismique en surface ou dans un autre puits, et des capteurs sismiques dans les boitiers 18 des différents modules M, et procéder à des cycles d'émission-réception avec enregistrements à la station de surface 40 des signaux collectés par l'ensemble d'acquisition 26 et transmis par 1er câble 32.

L'ensemble des modules peut être déplacé à volonté par addition (ou retrait) au train de tiges 39 de sections supplémentaires, de façon à explorer la formation sur une plus grande longueur de puits et réaliser des couvertures multiples.

Dans le premier mode de réalisation qui a été décrit, chaque module d'exploration comporte une seule lame flexible 11 pour appliquer un boitier d'instruments contre la paroi du puits, et un sabot d'appui 17 diamétralement opposé. Il est bien évident cependant, que l'on peut utiliser des modules d'exploration M1-Mn comportant éventuellement plusieurs lames flexibles portant éventuellement d'autres boitiers d'instruments 18.

C'est le cas notamment pour le mode de réalisation de la Fig.6 qui peut comporter deux lames flexibles 11 munies chacune d'un boitier pour des éléments d'exploration tels que des géophones par exemple. Le dispositif comporte un tube rigide 41a de diamètre inférieur à celui de chaque élément tubulaire 1 qui est disposé à l'intérieur de celui-ci. Il est maintenu en place par rapport à lui par deux manchons 42. Une gaîne élastique 43 est placée autour de chaque manchon 42 pour le découpler acoustiquement à la fois du tube 41 et de la paroi intérieure de l'élément tubulaire 1. Les lames flexibles 11 sont engagées partiellement dans des rainures 44 ménagées suivant deux génératrices opposées de chaque élément tubulaire 1. Les axes 13, à leurs extrémités opposées, peuvent coulisser dans des lumières de guidage 45 ménagées dans les embouts 42. Avec ce mode de fixation, chaque élément tubulaire offre une protection aux manchons de fixation des lames flexibles lorsque le dispositif progresse le long du puits.

On ne sortirait pas non plus du cadre de l'invention en associant à l'ensemble des modules d'exploration M1 à Mn, une section supplémentaire renfermant une source de signaux acoustiques ou sismiques, ou bien en plaçant dans les boitiers d'instruments 18 des transducteurs émetteurs et récepteurs.

On ne sortirait pas non plus du cadre de l'invention en :
- remplaçant les lames flexibles permettant le couplage des boitiers d'instruments avec la paroi du puits, par d'autres moyens de couplage tels que des patins reliés à des bras ouverts par action de moyens d'écartement tels que des moyens ressort;
- remplaçant l'ensemble d'acquisition unique 37 par des modules électroniques d'acquisition répartis dans différents éléments tubulaires 1 et communiquant les signaux acquis à un ensemble de codage et de transmission dans le bloc de raccordement 26;
- remplaçant les éléments tubulaires rigides par des éléments de câble multi-conducteurs semi-rigide avec une gaîne extérieure en fibres de verre;
- remplaçant les connecteurs mécaniques et électriques séparés 2 et 20A de la Fig. 4 par un mode de réalisation combiné où la connexion mécanique des éléments tubulaires entraîne un emboitement des connecteurs électriques, tel que décrit par exemple dans le brevet EP 290.338 du demandeur; ou en
- utilisant des éléments tubulaires 1 pourvus suivant une technique connue, de fentes destinées à réduire la vitesse de propagation des ondes le long de la colonne.

## Revendications

1. Dispositif d'exploration d'une formation souterraine traversée par un puits, adapté à être descendu dans une zone du puits où sa progression par gravité est difficile, et notamment dans une portion de puits fortement inclinée par rapport à la verticale, caractérisé en ce qu'il comporte :
- une pluralité de modules d'exploration rigides interconnectés bout à bout (M1-Mn) comprenant chacun un élément tubulaire rigide (1) pourvu, à chacune de ses extrémités, de moyens de connexion (2) avec au moins un autre élément tubulaire, au moins un boitier (18) contenant des éléments sensibles (19), des moyens d'écartement à ressorts (11) pour plaquer chaque boitier (18) en permanence contre la paroi du puits ainsi que des moyens de découplage (7, 10, 14) pour isoler mécaniquement chaque boitier, des éléments tubulaires (1);
- un câble de liaison (32) connecté à une station centrale (40) en surface; et
- un bloc de raccordement (26) comprenant un système de collecte (37) relié aux différents modules (M1-Mn) par un faisceau de conducteurs électriques (22) passant à l'intérieur des éléments tubulaires (1), reliés aux éléments sensibles (19), pour centraliser des signaux issus de ces différents éléments sensibles, et des moyens (28, 31) de connexion électrique différée en milieu humide entre le câble de liaison (32) et le système de collecte (37), ce bloc de raccordement (26) étant interposé entre l'ensemble des modules d'exploration (M1-Mn) et une colonne rigide (39) reliée à des moyens de maneuvre (38) en surface pour conduire l'ensemble d'exploration jusque dans ladite portion du puits.

2. Dispositif selon la revendication 1, caractérisé en ce que les moyens d'écartement à ressorts comportent des lames flexibles (11), chacune en appui à ses extrémités sur des manchons (3) solidaires de chaque élément tubulaire (1), sur lesquelles sont fixés les boitiers (18), et les moyens de découplage comportent des gaines (7) en un matériau amortisseur, interposées entre chaque lame flexible (11) et l'élément tubulaire (1) correspondant.

3. Dispositif selon la revendication 2, caractérisé en ce que chaque manchon (3) comporte un élément de support (4) disposé entre deux butées d'extrémité (5, 6) solidaires de l'élément tubulaire (1), et mécaniquement isolé par une gaine (7), de l'élément de support (4) et des butées (5, 6), le dispositif comportant des connecteurs électriques (20) à l'intérieur des éléments tubulaires rigides (1) pour la connexion électrique au faisceau des conducteurs électriques (22) associés aux éléments sensibles.

4. Dispositif selon la revendication 3, caractérisé en ce que chaque élément de support comporte deux parties (4a, 4b) disposées de part et d'autre de l'élément tubulaire (1), avec interposition de la gaine (7), et des moyens de fixation (8) pour réunir ces deux parties.

5. Dispositif selon la revendication 3 ou 4 caractérisé en ce qu'il comporte des moyens d'indexation (9) pour empêcher toute rotation des éléments de support par rapport à l'élément tubulaire (1).

6. Dispositif selon l'une des revendications 3 à 5, caractérisé en ce que chaque lame flexible est solidaire à ses extrémités, d'axes pouvant se déplacer dans des lumières de guidage (16) ménagées dans des plaques (15) solidaires de chaque élément de support (4).

7. Dispositif selon la revendication 1, caractérisé en ce que les moyens d'écartement à ressorts comportent des lames flexibles (11) sur lesquelles sont fixés les boitiers (18), chacune des lames flexibles (11) est engagée dans une fente (44) ménagée dans la paroi de la tige (1) suivant une génératrice et elle est en appui à ses extrémités opposées sur des manchons (42) solidaires d'un tube rigide (41) disposé à l'intérieur de chaque élément tubulaire (1), les moyens de découplage comportent des gaines (43) en un matériau amortisseur, interposées autour de chaque manchon (42) pour l'isoler acoustiquement à la fois de la paroi intérieure de l'élément tubulaire (1) et du tube rigide (41), et chaque lame flexible (11) est solidaire à ses extrémités, d'axes (13) pouvant se déplacer dans des lumières de guidage (45) ménagées dans les manchons (42).

8. Dispositif selon l'une des revendications précédentes, caractérisé en ce que les moyens de connexion électrique différée, comportent une fiche mâle multi-contacts (28), un prolongement tubulaire (29, 30) pour le guidage dans le bloc de raccordement (26), d'une prise femelle multi-contacts (31) reliée au câble multi-conducteurs (32), et des moyens de verrouillage (34) de la prise femelle (31) en position d'engagement.

9. Dispositif selon l'une des revendications précédentes, caractérisé en ce qu'il comporte un élément tubulaire de tête (24) comportant un balourd et un indicateur d'orientation pour déterminer le positionnement angulaire de l'ensemble des modules d'exploration (M1-Mn) par rapport à la verticale.

10. Dispositif selon l'une des revendications précédentes, caractérisé en ce que la colonne rigide (39) comporte un raccord spécial à fenêtre pour le passage du câble de liaison (32).

## Claims

1. Device for exploration of an underground formation crossed by a well, adapted to be lowered into a zone of the well in which its progress through gravity is difficult, and notably into a well portion which is greatly inclined in relation to the vertical, characterised in that it comprises:
- a plurality of rigid exploration modules (M1-Mn) interconnected end to end, each comprising a rigid tubular element (1) provided at each of its ends with means (2) for connection with at least one other tubular element, at least one box (18) containing sensitive elements (19), spacing means with springs (11) for pressing each box (18) permanently against the wall of the well, and decoupling means (7, 10, 14) for mechanically isolating each box from the tubular elements (1);
- a linking cable (32) connected to a central station (40) on the surface, and
- a connecting block (26) comprising a collecting system (37) connected to the different modules (M1-Mn) by a bundle of electrical conductors (22) passing inside the tubular elements (1), connected to the sensitive elements (19), for collating signals coming from these different sensitive elements, and means (28, 31) for deferred electrical connection in damp conditions between the linking cable (32) and the collecting system (37), this connecting block (26) being interposed between the array of exploration modules (M1-Mn) and a rigid string (39) connected to operating means (38) on the surface to drive the exploration assembly into said portion of the well.

2. Device according to claim 1, characterised in that the spacing means with springs comprise flexible leaves (11), each bearing at its ends on sleeves (3) locked to each tubular element (1), on which are fixed the boxes (18), and the decoupling means comprise sheaths (7) made of a damping material, interposed between each flexible leaf (11) and the corresponding tubular element (1).

3. Device according to claim 2, characterised in that each sleeve (3) comprises a supporting element (4) disposed between two end stops (5, 6) locked to the tubular element (1), and mechanically insulated by a sheath (7), from the supporting element (4) and the stops (5, 6), the device comprising electrical connectors (20) inside the rigid tubular elements (1) for electrical connection to the bundle of electrical conductors (22) connected to the sensitive elements.

4. Device according to claim 3, characterised in that each supporting element comprises two portions (4a, 4b) disposed on either side of the tubular element (1), with the sheath (7) interposed, and fixing means (8) for joining these two portions.

5. Device according to claim 3 or 4, characterised in that it comprises indexing means (9) for preventing any rotation of the supporting elements in relation to the tubular element (1).

6. Device according to one of claims 3 to 5, characterised in that each flexible leaf is locked at its ends to pins capable of moving in guide openings (16) formed in plates (15) locked to each supporting element (4).

7. Device according to claim 1, characterised in that the spacing means with springs comprise flexible leaves (11) on which are fixed the boxes (18), each of the flexible leaves (11) is engaged in a slot (44) formed in the wall of the pipe (1) along a generating line, and it bears at its opposite ends on sleeves (42) locked to a rigid tube (41) disposed inside each tubular element (1), the decoupling means comprises sheaths (43) made of a damping material, interposed around each sleeve (42) in order to insulate it acoustically both from the inner wall of the tubular element (1) and from the rigid tube (41), and each flexible leaf (11) is locked at its ends to pins (13) capable of moving in guide openings (45) formed in the sleeves (42).

8. Device according to one of the preceding claims, characterised in that the means for deferred electrical connection comprise a multi-contact male connector (28), a tubular extension (29, 30) for guidance in the connecting block (26) of a multi-contact female connector (31) connected to the multi-conductor cable (32), and means (34) for locking the female connector (31) in the engaged position.

9. Device according to one of the preceding claims, characterised in that it comprises a tubular head element (24) comprising an unbalanced weight and an orientation indicator to determine the angular position of the array of the exploration modules (M1-Mn) in relation to the vertical.

10. Device according to one of the preceding claims, characterised in that the rigid string (39) comprises a special side-entry sub for passage of the linking cable (32).

## Patentansprüche

1. Vorrichtung zur Exploration einer von einem Bohrloch durchquerten unterirdischen Formation, ausgelegt, um in eine Zone des Bohrlochs hinabgefahren zu werden, wo ihr Vordringen durch Schwerkraft schwierig ist, und insbesondere in einen, im Verhältnis zur Vertikalen stark geneigten Teil des Bohrlochs, dadurch gekennzeichnet, dass sie umfasst:
- eine Vielzahl endseitig miteinander verbundener steifer Explorationsmodule (M1-Mn), die je über ein steifes, rohrförmiges Element (1) verfügen, das an jedem seiner Enden mit Mitteln (2) zur Verbindung mit zumindest einem anderen rohrförmigen Element versehen ist, zumindest ein, Fühlelemente (19) umfassendes Gehäuse (18), Federbeabstandungsmittel (11), um jedes Gehäuse (18) permanent gegen die Wand des Bohrlochs zu drücken, sowie Entkupplungsmittel (7, 10, 14), um jedes Gehäuse mechanisch von den rohrförmigen Elementen (1) zu isolieren;
- ein, mit einer zentralen Station (40) an der Oberfläche verbundenes Verbindungskabel (32); und
- einen Verbindungsblock (26), der ein Sammelsystem (37) umfasst, das mit den verschiedenen Modulen (Ml-Mn) durch ein Bündel elektrischer Leiter (22) verbunden ist, die im Inneren der rohrförmigen Elemente (1) verlaufen und mit den Fühlelementen (19) verbunden sind, um von den verschiedenen Fühlelementen stammende Signale zu zentralisieren, und Mittel zur verzögerten elektrischen Verbindung (28, 31) im feuchten Medium zwischen dem Verbindungskabel (32) und dem Sammelsystem (37), wobei dieser Verbindungsblock (26) zwischen die Anordnung der Explorationsmodule (M1-Mn) und eine steife, mit Manövriermitteln (38) an der Oberfläche verbundene Kolonne, um die Explorationseinheit bis in diesen Teil des Bohrlochs zu führen.

2. Vorrichtung nach Anspruch 1, dadurch gekennzeichnet, dass die Federbeabstandungsmittel flexible Lamellen (11) umfassen, die jede mit ihren Enden, gegen Muffen (3) gestützt sind, die fest bezüglich jeden rohrförmigen Elements (1) sind und auf denen die Gehäuse (18) befestigt sind und die Entkupplungsmittel, welche zwischen jede flexible Lamelle (11) und das entsprechende rohrförmige Element (1) zwischengesetzte Hüllen (7) aus einem Dämpfermaterial umfassen.

3. Vorrichtung nach Anspruch 2, dadurch gekennzeichnet, dass jede Muffe (3) ein Stützelement (4) umfasst, das zwischen zwei bezüglich des rohrförmigen Elements (1) festen Endanschlägen (5, 6) angeordnet und mechanisch durch eine Hülle (7) gegen das Stützelement (4) und die Anschläge (5, 6) isoliert ist, wobei die Vorrichtung elektrische Verbindungen (20) im Inneren der steifen rohrförmigen Elemente (1) für die elektrische Verbindung zu dem elektrischen Leiterbündel (22) aufweist, die den Fühlelementen zugeordnet sind.

4. Vorrichtung nach Anspruch 3, dadurch gekennzeichnet, dass jedes Stützelement zwei auf der einen und der anderen Seite des rohrförmigen Elements (1) angeordnete Teile (4a, 4b) unter Zwischenschaltung der Hülle (7) und Befestigungsmittel (8) zur Vereinigung diese beiden Teile umfasst.

5. Vorrichtung nach Anspruch 3 oder 4, dadurch gekennzeichnet, dass sie Verriegelungsmittel (9) umfasst, um jede Rotation der Stützelemente im Bezug zu dem rohrförmigen Element (1) zu verhindern.

6. Vorrichtung nach einem der Ansprüche 3 bis 5, dadurch gekennzeichnet, dass jede flexible Lamelle an ihren Enden mit Achsen fest verbunden ist, die sich in, in mit jedem Stützelement (4) verbundenen Platten (15) ausgesparten Führungsschlitzen (16) verschieben können.

7. Vorrichtung nach Anspruch 1, dadurch gekennzeichnet, dass die Federbeabstandungsmittel flexible Lamellen (11) umfassen, auf denen die Gehäuse (18) befestigt sind, jede der flexiblen Lamellen (11) in einen gemäß einer Mantellinie in der Wand der Stange (1) ausgesparten Schlitz eingreift und sie an ihren entgegenliegenden Enden auf die Muffen (42) gestützt ist, die mit einem, im Inneren jedes rohrförmigen Elements (1) angeordneten, steifen Rohr (41) verbunden sind, die Entkupplungsmittel Hüllen (43) aus einem Dämpfermaterial umfassen, die um jede Muffe (42) herum zwischengesetzt sind, um sie jeweils von der Wand in dem rohrförmigen Element (1) und dem steifen Rohr (41) akustisch zu isolieren, und jede flexible Lamelle (11) an ihren Enden mit Achsen (13) fest verbunden ist, die sich in, in den Muffen (42) ausgesparten Führungsschlitzen (45) verschieben können.

8. Vorrichtung nach einem der vorhergehenden Ansprüche, dadurch gekennzeichnet, dass die Mittel zur verzögerten elektrischen Verbindung einen Multikontakt-Stecker (28), eine rohrförmige Verlängerung (29, 30) zur Führung einer mit dem Mehrfachleiterkabel (32) verbundenen Multikontakt-Buchse (31) in dem Verbindungsblock (26) und Verriegelungsmittel (34) der Buchse (31) in Eingriffstellung umfasst.

9. Vorrichtung nach einem der vorhergehenden Ansprüche, dadurch gekennzeichnet, dass sie ein rohrförmiges Kopfelement (24) umfasst, das eine Unwucht und einen Orientierungsanzeiger umfasst, um die Winkelpositionierung der Einheit von Explorationsmodulen (Ml-Mn) im Verhältnis zur Vertikale zu bestimmen.

10. Vorrichtung einem der vorhergehenden Ansprüche, dadurch gekennzeichnet, dass die steife Kolonne (39) eine Spezialverbindung mit Fenster zum Durchgang des Verbindungskabels (32) umfasst.
